# EUROPEAN PATENT SPECIFICATION

(11) **EP 0 729 666 B1**
(45) Date of publication and mention of the grant of the patent: **03.06.1998**
(21) Application number: 95901656.9
(22) Date of filing: 14.11.1994
(51) Int. Cl.: H02K 15/14

(54) **METHOD FOR MANUFACTURING A STATOR FOR A ROTATING ELECTRIC MACHINE**
VERFAHREN ZUR HERSTELLUNG EINES STATORS FÜR EINE ROTIERENDE ELEKTRISCHE MASCHINE
PROCEDE DE FABRICATION D'UN STATOR POUR UNE MACHINE ELECTRIQUE ROTATIVE

(30) Priority: 15.11.1993 SE 9303758
(43) Date of publication of application: 04.09.1996
(73) Proprietor: ASEA BROWN BOVERI AB, 721 83 Västeras (SE)
(72) Inventor: LOTHIAN, Keith, S-724 68 Väster s (SE); OLOFSSON, Ingemar, S-730 50 Skultuna (SE)
(86) International application number: SE9401069
(87) International publication number: WO9514325

(56) References cited:
- EP-A- 0 048 213
- SE-B- 310 641
- PATENT ABSTRACTS OF JAPAN, Vol. 7, No. 239, E-206; & JP,A,58 127 541, (TOKYO SHIBAURA DENKI K.K.), 29 July 1983.

## Description

The present invention relates generally to a method for separating heavy metals, such as zinc, and alcohols from an emulsified organic/aqueous effluent by means of a reverse osmosis membrane and/or a pervaporation membrane.

### BACKGROUND OF THE INVENTION

The disposal of emulsified organic/aqueous effluent streams from chemical processes is of particular concern during the manufacture of lube oil additives, such as metal dialkyldithiophosphates. Metal dialkyldithiophosphate salts preferably comprise a Group IIB metal or a metal selected from the group consisting of copper, molybdenum, antimony, zinc and mixtures thereof. The preferred lube oil additive is zinc dialkyldithiophosphate (ZDDP). The alkyl groups preferably comprise C₃ to C₁₀ alkyls. Therefore, the emulsified organic/aqueous effluent streams generated from these processes include, together with water, substantial amounts of environmentally undesirable materials, i.e., heavy metal complexes and alcohols.

Conventional methods for treating emulsified organic/aqueous effluent streams containing a metal complex and alcohols typically utilize phase separation to produce a saturated aqueous phase and a saturated alcohol phase. The aqueous phase, which comprises a metal complex, water and residual alcohol, is typically discharged untreated into the plant's sewer system.

The alcohol phase is typically sent on to hazardous waste disposal.

However, conventional phase separation of the emulsified organic/aqueous effluent stream is incapable of reducing the levels of metal complex discharged together with the aqueous phase to acceptable environmental standards.

The present invention overcomes these strict environmental standards and also provides for the recycling of the alcohol upstream of the process which enhances the cost effectiveness of the overall process and avoids hazardous waste disposal of the alcohol.

The present invention also provides many additional advantages which shall become apparent as described below.

US-A-4366063 discloses a method of removing water and other components from drilling mud containing water, solids, hydrocarbons and dissolved salt. After removal of the solids by filtration the stream is separated into a recoverable hydrocarbon stream and a water stream containing dissolved salts in a filtration/adsorption unit upstream of a reverse osmosis unit.

### SUMMARY OF THE INVENTION

According to the present invention there is provided a method for treating an emulsified organic/aqueous effluent stream that comprises water and alcohol, said treatment comprises the steps of:
separating said emulsified organic/aqueous effluent stream into an aqueous phase stream which comprises water and residual alcohol and an organic phase stream which comprises alcohol and residual water, using a phase separator or coalescer;
separating said aqueous phase stream into an organic enriched stream and aqueous stream by contacting a membrane separator with said aqueous phase stream;
recycling said organic enriched stream to said emulsified organic/aqueous effluent stream; and
discharging said aqueous stream.

In a further aspect of the invention the method comprises the steps of:
separating said organic phase stream into an organic-rich stream and an organic-poor stream; and
recycling said organic-poor stream to either said aqueous phase stream or said organic phase stream.

In a preferred aspect the invention relates to a method for separating metal complexes, such as zinc, and alcohols from an emulsified organic/aqueous effluent by phase separation followed by contacting the aqueous phase with a reverse osmosis membrane so that water passes through the membrane, as permeate, and the metal complex and residual alcohols are recycled to the phase separator, as retentate. Alternatively, the aqueous phase may be contacted with the reverse osmosis membrane, as described above, while the organic phase is contacted with a pervaporation membrane so that water passes through the membrane, as permeate, and metal complexes and residual alcohols are recycled to the upstream metal dialkyldithiophosphate process, as retentate.

Other and further objects, advantages and features of the present invention will be understood by reference to the following specification in conjunction with the annexed drawings, wherein like parts have been given like numbers.

### BRIEF DESCRIPTION OF THE DRAWINGS

Fig. 1 is a schematic representation of the separation process according to one embodiment of the present invention wherein a reverse osmosis membrane is used to treat an aqueous phase stream so as to separate alcohol and zinc from water;
Fig. 2 is a schematic representation of the separation process according to another embodiment of the present invention wherein a reverse osmosis membrane is used to treat an aqueous phase stream and a pervaporation membrane is used to treat an alcohol phase stream;
Fig. 3 is a graph plotting membrane flux verses volume reduction (VR) with no pH adjustment for the separation of alcohol and zinc from an emulsified organic/aqueous effluent stream under reverse osmosis conditions; and
Fig. 4 is a graph plotting membrane flux verses volume reduction (VR) with pH adjustment for the separation of alcohol and zinc from an emulsified organic/aqueous effluent stream under reverse osmosis conditions.

### DESCRIPTION OF THE PREFERRED EMBODIMENTS

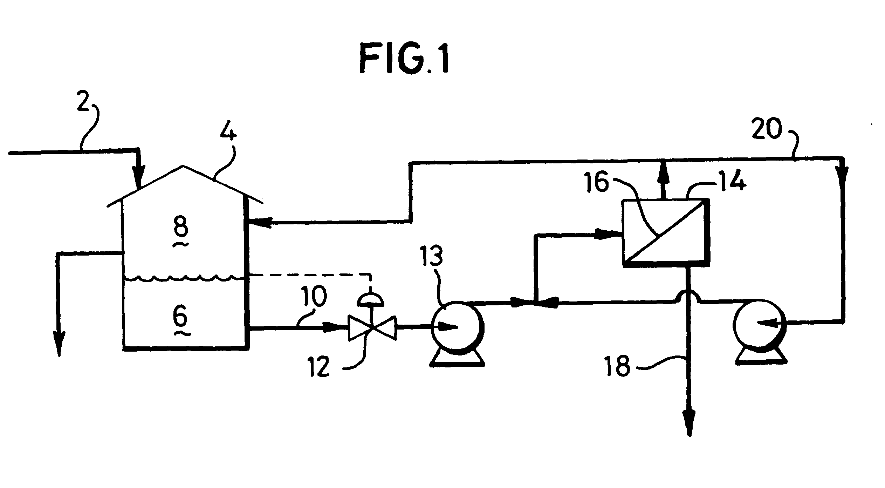

The present invention can best be described by referring to the attached drawings wherein Fig. 1 depicts a method for separating metal complexes, such as zinc, and alcohols from an emulsified organic/aqueous effluent by phase separation followed by contacting a reverse osmosis membrane with the aqueous phase so that water passes through the membrane, as permeate, and the metal complex and residual alcohols are recycled tc the phase separator, as retentate. The emulsified organic/aqueous effluent typically comprises an emulsified two-phase mixture of alcohol and water.

An emulsified organic/aqueous effluent stream separated from a crude metal dialkyldithiophosphate product is sent via conduit 2 to a phase separator or coalescer 4. The emulsified organic/aqueous effluent stream typically comprises water, a metal complex and alcohols. Once the emulsified organic/aqueous effluent stream is contained within phase separator 4 it separates by gravity settling into a saturated aqueous phase stream 6 which comprises water, a metal complex and residual alcohol and a saturated organic phase stream 8 which comprises alcohol, residual water and a metal complex.

Thereafter, aqueous phase stream 6 is passed from separator 4 via conduit 10, interface controller valve 12, and pump 13 to separator unit 14. Aqueous phase stream 6 contacts membrane 16 under reverse osmosis conditions such that aqueous phase stream 6 is separated into a metal and alcohol enriched retentate and an aqueous permeate. The metal and alcohol enriched retentate is thereafter recycled to emulsified organic/aqueous effluent stream 6 via recycle conduit 20. The aqueous permeate is discharged from separator 14 to conventional plant sewer systems via conduit 18.

Reverse osmosis is a process that reverses, by the application of pressure (i.e., a pressure in the range between about 2.068 x 10⁵ N/m² to about 1.379 x 10⁷ N/m²), the flow of water in the natural process of osmosis so that it passes from the more concentrated to the more dilute solution.

Reverse osmosis membrane 16 is preferably a solvent resistant membrane, such as an interfacially polymerized polyamide-based membrane. One preferred polyamide-based membrane is an interfacially synthesized reverse osmosis membrane comprising a microporous substrate and an ultra-thin membrane covering the substrate, wherein the ultra-thin membrane comprises a crosslinked aromatic polyamide.

Some examples of solvent resistant, reverse osmosis, membranes are set forth in U.S. Patent Nos. 4,857,363 (Sasaki et al.), which issued on August 15, 1989, 5,051,178 (Uemura et al.), which issued on September 24, 1991, 4,758,343 (Sasaki et al.), which issued on July 19, 1988, and 4,761,234 (Uemura et al.), which issued on August 2, 1988. Still other interfacially polymerized reverse osmosis membranes are disclosed in U.S. Patent Nos. 4,039,440 (Cadotte), which issued on August 2, 1997, 4,277,344 (Cadotte), which issued on July 7, 1981, 4,769,148 (Fibiger et al.), which issued on September 6, 1988, and 4,859,384 (Fibiger et al.), which issued on August 22, 1989. Any membrane which is capable of separating metals and alcohols from water by permeating water and retaining the metals and alcohols is also contemplated hereby.

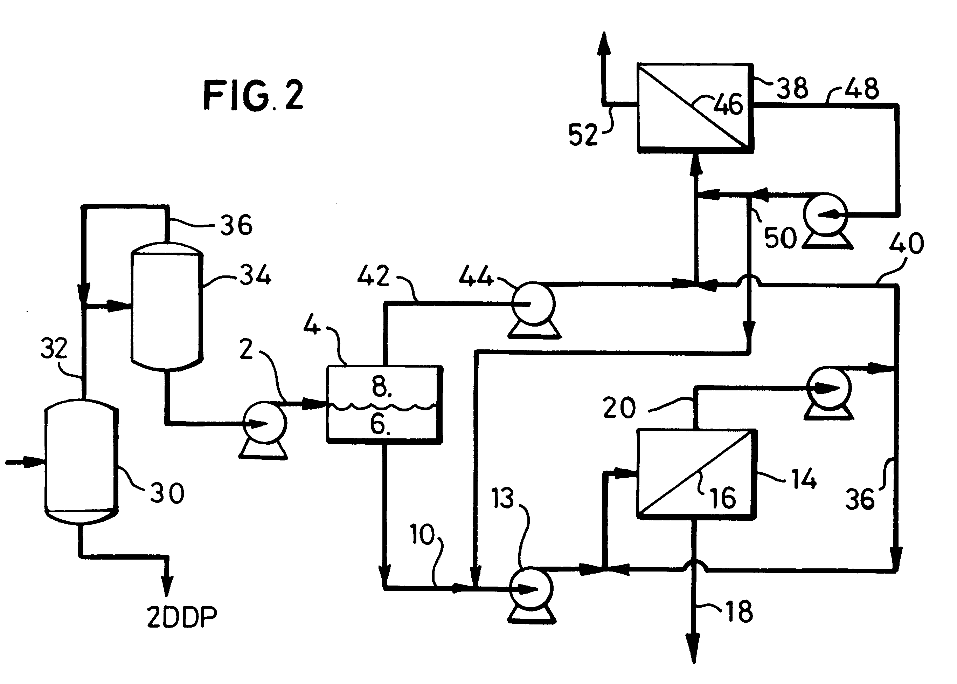

Alternatively as shown in Fig. 2, the reverse osmosis membrane may be contacted with the aqueous phase stream, as described above, while a pervaporation membrane is contacted with the organic phase stream so that water passes through the membrane, as permeate, and metal complexes and residual alcohols are recycled to the upstream process, as retentate.

That is, an emulsified organic/aqueous effluent stream produced from a metal dialkyldithiophosphate reaction process is separated from the crude metal dialkyldithiophosphate product by vacuum flask 30, wherein the metal dialkyldithiophosphate product is removed as bottoms and a crude aqueous stream is taken overhead. The crude emulsified organic/aqueous effluent stream is passed to a second distillation column 34 via conduit 32 wherein an emulsified organic/aqueous effluent stream is taken as bottoms and thereafter passed to phase separator or coalescer 4 via conduit 2 for phase separation. The overhead components (i.e., alcohol and water) taken from distillation column 34 are recycled via conduit 36 to conduit 32.

The emulsified organic/aqueous effluent stream disposed within phase separator 4 separates by gravity settling into an aqueous phase stream 6 which comprises water, at least one metal complex, and residual alcohol and an organic phase stream 8 which comprises alcohol, residual water and a metal complex.

Thereafter, aqueous phase stream 6 is passed from first separator 4 via conduit 10 and pump 13 to separator unit 14. Aqueous phase stream 6 contacts membrane 16 under reverse osmosis conditions such that it is separated into a metal and alcohol enriched retentate and an aqueous permeate. The metal and alcohol enriched retentate is thereafter either recycled to the aqueous phase stream via conduits 20 and 36, or recycled upstream of second separator 38 via conduit 40. The aqueous permeate is discharged from separator 14 to a conventional plant sewer system via conduit 18.

The organic phase stream 8 from phase separator 4 is delivered to second separator unit 38 via conduit 42 and pump 44. Organic phase stream 8 thereafter contacts a membrane separator 46 under pervaporating conditions wherein it is separated into an organic-rich stream, as retentate, and an organic-poor stream, as permeate. The organic-poor stream is then recycled to either conduit 10 which is upstream of first separator unit 14 via conduits 48 and 50 or to conduit 42 upstream of second separator unit 38.

The organic-rich stream is recycled via conduit 52 for use as a reactant in the synthesis of the crude metal dialkyldithiophosphate product.

Pervaporation separations are typically run at generally higher temperatures than perstraction and rely on vacuum on the permeate side to evaporate the permeate from the surface of the membrane and maintain the concentration gradient driving force which drives the separation process.

Pervaporation membranes are polymeric solubility membranes in the peculiar state of anisotropic swelling which is a consequence of the phase change involved. The choice of the membrane polymer has direct bearing on the separation effect to be achieved, as is illustrated by aqueous-organic separations, which may be directed at selective removal of water (dehydration), or at selective removal and concomitant enrichment of the organic component (the ambivalent nature of pervaporation). Three distinct types of membrane polymers for pervaporation of aqueous-organic solutions can be identified. These include: (1) glassy (amorphous) polymers that preferentially permeate water; (2) elastomeric polymers that interact preferentially with the organic solution component; and (3) ion exchange membranes that may be view as crosslinked electrolytes.

Because liquid mixtures cannot be separated using porous membranes, pervaporation membranes must be either fully dense membranes or membranes having a dense top layer, either asymmetric or composite.

Pervaporation membrane 46 (i.e., a dehydration pervaporation membrane) is preferably selected from the group consisting of: polyvinyl alcohol (crosslinked or non-crosslinked), polyacrylate salt on polyethersulfone, crosslinked composite of a polysaccharide, grafted polyethylene, polypropylene, poly(n-vinylpyrrolidone)-co-acrylonitrile, ion-exchange resin/pendant acid groups, and a blend of polyvinyl alcohol, polyacrylic acid and nylon. Some examples of pervaporation membranes are set forth in U.S. Patent Nos. 4,755,299 (Bruschke), which issued on July 5, 1988, 5,059,327 [Takegami), which issued on October 22, 1991, 4,728,431 (Nagura et al.), which issued on March 1, 1988, and 5,009,783 (Bartels), which issued on April 23, 1991. Any membrane which is capable of dehydrating an organic-rich stream by permeation of water therethrough and retention of the organics is also contemplated hereby.

The most prominent pervaporation material is polyvinyl alcohol (PVA). It is preferable to provide pervaporation membranes wherein the polyvinyl alcohol has been crosslinked with, for example, maleic acid, and an aliphatic polyaldehyde. Such crosslinked PVA membranes are disclosed in U.S. Patent Nos. 4,935,144 (Reale, Jr. et al,), which issued on June 19, 1990, and 4,802,988 (Bartels et al.), which issued on February 7, 1989.

A typical aqueous effluent treated in accordance with the present invention includes the following constituents set forth in Table 1 below:

**TABLE 1**

| Compound | Feed | Composite Permeate at 50% VR | Aqueous Phase at 50% VR |
|---|---|---|---|
| Sec. Butanol | 1.73 wt% | 0 | 1.36 |
| Isobutanol | 3.01 wt% | 0 | 1.88 |
| MIBC | 0.11 wt% | 0 | Trace |
| Isoamyl | 0.18 wt% | 0 | 0.07 |
| N-amyl | 0.24 wt% | 0 | 0.12 |
| zinc | 28 ppm | 0.5 | 79 |
| TOC | 29,000 ppm | 1200 | Not Avail. |
| Note: MIBC denotes methylisobutyl carbinol. TOC denotes total organic carbon. | | | |

### EXAMPLE 1

A reverse osmosis application test aimed at separating zinc as well as a large fraction of alcohols from an aqueous phase stream previously separated from an emulsified organic/aqueous effluent discharged from a zinc dialkyldithiophosphate process was conducted to determine zinc and alcohol retention properties of Filmtec's FT-30 SW reverse osmosis membrane. The tests at 0% volume reduction (VR) (i.e., no permeate withdrawal) were positive, showing a zinc rejection of 98.7% and alcohol rejection of 93% by the membrane. The permeate flux at 0% VR was ca 4.06 l/m²/hr (2.4 gfd) at 4.1 × 10⁶ N/m² (600 psig).

Set forth below in Table 2 is an analyses of the aqueous phase stream which has been subjected to membrane separation under reverse osmosis conditions.

**Table 2**

| | Feed | VR 0% Perm. | VR 25% Perm. | VR 50% Perm. | Aq. Phase 50% Conc. | Comp. Permeate at 50% | % Reject. |
|---|---|---|---|---|---|---|---|
| pH | 3.73 | 3.3 | 3.22 | 3.22 | 4.05 | - | - |
| TOC (mg/L) | 29000 | 5500 | 4300 | 85 | 300,000* | 1200 | 95.9+ |
| zinc (mg/L) | 25 | 0.33 | 0.19 | 0.18 | 50 | 0.21 | 99.6- |
| BOD₅ | - | - | - | - | - | - | 4100 |

| | | | | | | | |
|---|---|---|---|---|---|---|---|
| Notes: * The high number is probably due to incomplete separation of the free alcohol phase. + Calculated from feed TOC and composite permeate TOC. - Calculated from 50% concentration of zinc and composite permeate zinc. BOD₅ denotes biological oxygen demand. | | | | | | | |

The separation data in Table 2 demonstrates good rejection of zinc and the alcohols (i.e., 99.6% and 95.9%, respectively). When compared with separation data from phase separation alone, these figures suggest an improvement in the rejection of both the zinc and the alcohols upon concentration of the feed.

### EXAMPLE 2

A test was conducted using a Filmtec FT-30 SW membrane (i.e,, 2.5 inches (6.35 cm) x 14 inches (35.56 cm) spiral wound membrane). An aqueous phase stream previously separated from an emulsified organic/aqueous effluent stream discharged from a zinc dialkyldithiophosphate process was passed over the membrane at both 4.1 × 10⁶ N/m² (600 psig) and 5.5 × 10⁶ N/m² (800 psig) at 0% volume reduction. The results are set forth below in Table 3.

**TABLE 3**

| Elapsed Time(hours) | Temp. °C(°F) | Press. (psig) | Press. (psig) | Perm. Rate (ml/min.) | Flux (USgfd) | Rejection (%) |
|---|---|---|---|---|---|---|
| 0 | 23(74) | 820 | 780 | 100 | 3.6 | 53.2 |
| 0.5 | 24(76) | 820 | 780 | 87 | 3.2 | 54.0 |
| 1.0 | 24(76) | 820 | 780 | 82 | 3.0 | 54.4 |
| 2.0 | 24(76) | 820 | 780 | 75 | 2.7 | 55.4 |
| 3.75 | 25(77) | 820 | 780 | 74 | 2.7 | 55.0 |
| 4.5 | 22(72) | 620 | 580 | 38 | 1.4 | 53.1 |
| 9.5 | 24(76) | 830 | 770 | 62 | 2.2 | 53.8 |
| 9.5 | 24(75) | 620 | 580 | 38 | 1.4 | - |
| 25.5 | 22(72) | 620 | 580 | 25 | 0.9 | 50.7 |
| 25.8 | 25(77) | 830 | 770 | 44 | 1.6 | - |
| 32.0 | 24(76) | 615 | 585 | 22 | 0.8 | 52.8 |
| 32.0 | 25(77) | 830 | 770 | 36 | 1.3 | - |
| 54.0 | 27(80) | 630 | 570 | 17 | 0.6 | 63.7 |
| 54.75 | 24(76) | 835 | 765 | 30 | 1.1 | 66.7 |

The permeate flux dropped after approximately 25 hours to 1.69 l/m²/hr (1.0 gfd) and 2.7 l/m²/hr (1.6 gfd) at 4.1 × 10⁶ N/m² (600 psig) and 5.516 × 10⁶ N/m² (800 psig), respectively. The pH of this Example 2 was 3.7, compared to a pH of 4.5 for Example 1.

### EXAMPLE 3

A concentration test was then carried out over a period of 32 hours, with volume reduction increased from 0% to 53%, as shown in Table 3 above. Most of the concentration tests were carried out at an average transmembrane pressure of 800 psi (5.5 x 10⁶ N/m²). This relatively high operating pressure was selected in view of the low overall permeate flux obtained. A pressure verses flux study was also conducted at a number of volume reductions (i.e., 0%, 36% and 50%). The pressure was adjusted over the range of 2.8 × 10⁶ N/m² (400 psi) to 6.9 × 10⁶ N/m² (1,000 psi). As to be expected, for a given VR, the flux increased linearly with operating pressure. At 5.5 × 10⁶ N/m² (800 psi), the flux decreased from 2.7 l/m²/hr (1.6 gfd) at 0% VR to 2.2 l/m²/hr (1.3 gfd) at 9% recovery and remained reasonably constant at between 1.86 and 2.03 l/m²/hr (1.1 and 1.2 gfd) as the volume reduction was increased from 9% to about 50%. The constant flux, albeit low, can be explained by a relatively constant osmotic pressure exerted by the aqueous phase. As the wastewater becomes saturated (presumably at approximately 9% VR), the alcohol begins to separate into a second phase which will not contribute to osmotic pressure. The highest achievable permeate flux during the concentration test was 2.54 l/m²/hr (1.5 gfd) which was obtained at a transmembrane pressure of 6.9 × 10⁶ N/m² (1,000 psi).

### EXAMPLE 4

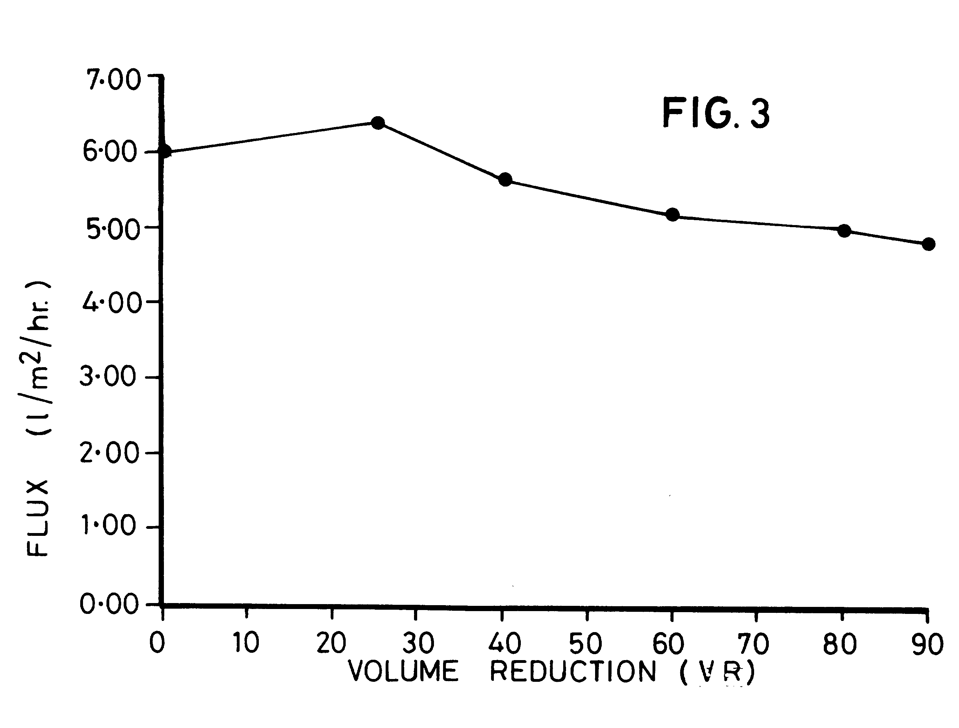

Continuous membrane testing of an aqueous phase stream previously separated from an emulsified organic/aqueous effluent stream from a zinc dialkyldithiophosphate process using an interfacially polymerized polyamide-based, solvent resistant, reverse osmosis, SU-810 membrane, manufactured by Toray Industries, Inc., of Tokyo, Japan, demonstrated excellent separation properties and stable membrane flux. As shown in Table 4 below and Fig. 3, the TOC (i.e, alcohol) rejection was approximately 90%, the zinc rejection was approximately 98%, and the permeate flux was relatively stable at approximately 5.07 l/m²/hr (3 gfd) at 5.5 × 10⁶ N/m² (800 psig).

**Table 4**

| (No pH Adjustment) | | | | | | | | | | |
|---|---|---|---|---|---|---|---|---|---|---|
| | Feed | Conc. | 0% VR Perm. | Rej.% | Conc. | 25% VR Perm. | Rej.% | Conc. | 40% VR Perm. | Rej.% |
| pH | 3.77 | 3.77 | 3.33 | - | 3.77 | 3.32 | - | 3.83 | 3.30 | - |
| Cond. | 213 | 213 | 136 | 36.2 | 234 | 137 | 41.5 | 250 | 144 | 42.4 |
| Zinc | 27 | 24 | 0.33 | 98.6 | 29 | 0.32 | 98.9 | 36 | 0.37 | 99.0 |
| TOC | 36000 | 34000 | 1400 | 95.9 | 43000 | 2300 | 94.7 | 53000 | 3300 | 93.8 |
| Iron | 83 | 62 | 0.9 | 98.5 | - | - | - | - | - | - |
| RI | 3.2 | 3.6 | 0.2 | 94.4 | 4.2 | 0.2 | 95.2 | 5.0 | 0.2 | 96.0 |
| Flux | | | 6.25(3.7) | | | 6.47(3.83) | | | 6.47(3.83) | |

| | Feed | Conc. | 60% VR Perm. | Rej.% | Conc. | 80% VR Perm. | Rej.% | Conc. | 90% VR Perm. | Rej. % |
|---|---|---|---|---|---|---|---|---|---|---|
| pH | 3.77 | 3.96 | 3.28 | - | 4.11 | 3.34 | - | 4.22 | 3.27 | - |
| Cond. | 213 | 289 | 148 | 48.8 | 390 | 153 | 60.8 | 565 | 160 | 71.7 |
| Zinc | 27 | 48 | 0.41 | 99.2 | 81 | 0.52 | 99.4 | 120 | 2.1 | 98.3 |
| TOC | 36000 | 71000 | 6000 | 91.5 | 96000 | 8000 | 91.7 | 92000 | 12000 | 87.0 |
| Iron | 83 | - | - | - | - | - | - | - | - | - |
| RI | 3.2 | 6.0 | 0.6 | 90.0 | 7.2 | 0.8 | 88.9 | 7.6 | 1.2 | 84.2 |
| Flux | | | 5.24(3.1) | | | 4.76(2.82) | | | 5.05(2.99) | |
| Note: Conductivity was measured in µS/cm. Zinc, TOC and Iron were measured in mg/L. Refractive Index (RI) was measured in Brix. Flux was measured in l/m²/hr (gfd). | | | | | | | | | | |

### Example 5

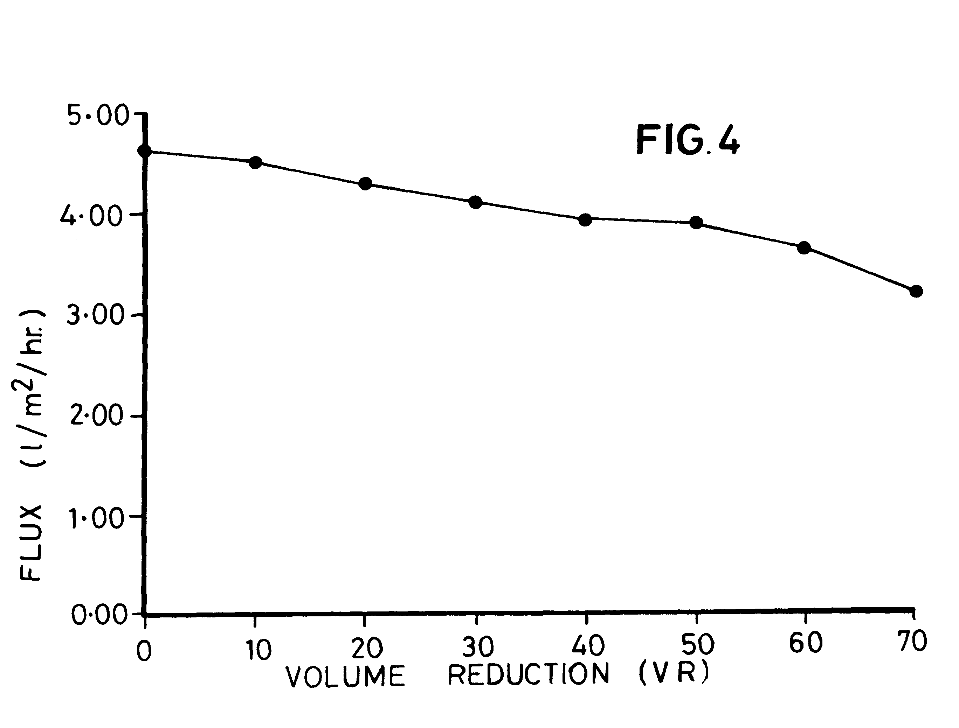

As demonstrated in Fig. 4 and Table 5, pH adjustments of the aqueous phase stream to 6.0 resulted in partial precipitation of zinc and iron, higher volume reduction factors required to form the free alcohol (⁻70% VR), poorer alcohol rejections (i.e., 74-87%) and lower flux (i.e.,3.21 l/m²/hr (1.9 gfd) verses 5.24 l/m²/hr (3.1 gfd) from the straight sample). The lower flux is most likely due to higher osmotic pressures. These tests confirmed that there were no clear advantages in adjusting the pH of the water upwards prior to reverse osmosis treatment.

**Table 5**

| (pH Adjustment) | | | | | | | | | |
|---|---|---|---|---|---|---|---|---|---|
| | Conc. | 0% VR Perm. | Rej.% | Conc. | 10% VR Perm. | Rej.% | Conc. | 20% VRPerm. | Rej.% |
| pH | 5.77 | 5.89 | - | 6.07 | 5.88 | - | 6.06 | 5.87 | - |
| Cond. | 704 | 28 | 96.0 | 761 | 30.000 | 96.1 | 816 | 32 | 96.1 |
| Zinc | 5.84 | 0.025 | 99.6 | 5.8 | 0.032 | 99.4 | 6.7 | 0.038 | 99.4 |
| TOC | 33000 | 5500 | 83.3 | 34000 | 6000 | 82.4 | 37000 | 7000 | 81.1 |
| Iron | 2.6 | <0.01 | - | - | - | - | - | - | - |
| RI | 2.6 | 0.0 | 100.0 | 2.6 | 0.2 | 92.3 | 3.0 | 0.2 | 93.3 |
| Flux | | 4.76(2.82) | | | 4.63(2.74) | | | 4.4(2.61) | |

| | Conc. | 30% VR Perm. | Rej.% | Conc. | 40% VR Perm. | Rej.% | conc. | 50% VR Perm. | Rej.% |
|---|---|---|---|---|---|---|---|---|---|
| pH | 6.02 | 5.87 | - | 6.10 | 5.92 | - | 5.96 | 5.66 | - |
| Cond. | 901 | 33 | 96.3 | 1122 | 55 | 95.1 | 1359 | 64 | 95.3 |
| Zinc | 6.8 | 0.036 | 99.5 | 7.7 | 0.054 | 99.3 | 8.83 | 0.121 | 98.6 |
| TOC | 45000 | 6000 | 86.7 | - | - | - | 45000 | 7500 | 83.3 |
| Iron | - | - | - | - | - | - | - | - | - |
| RI | 3.4 | 0.2 | 94.1 | 3.6 | 0.2 | 94.4 | 4.0 | 0.2 | 95.0 |
| Flux | | 4.23(2.5) | | | 3.94(2.33) | | | 3.94(2.33) | |

| | Conc. | 60% VR Perm. | Rej.% | Conc. | 70% VR Perm. | Rej.% | | | |
|---|---|---|---|---|---|---|---|---|---|
| pH | 5.84 | 5.53 | - | 5.80 | 5.30 | - | | | |
| Cond. | 1692 | 79 | 95.3 | 2090 | 105 | 95.0 | | | |
| Zinc | 10.90 | 0.148 | 98.6 | 14.30 | 0.176 | 98.8 | | | |
| TOC | 55000 | 12000 | 78.2 | 69000 | 18000 | 73.9 | | | |
| Iron | - | - | - | - | - | - | | | |
| RI | 4.8 | 0.6 | 87.5 | 5.6 | 1.0 | 82.1 | | | |
| Flux | | 3.72(2.2) | | | 3.21(1.9) | | | | |

Upon formation of free alcohol at a VR of 60%, a highly stable alcohol/water emulsion was formed. Using a separatory funnel, the reverse osmosis concentrate formed a thin alcohol film on top, a bulk phase containing a yellowish haze (i.e., very fine alcohol droplet dispersion) and a small clear water phase at the bottom. This emulsion remained stable for many weeks. In order to ensure optimum performance *of* the reverse osmosis membrane and the adequate functioning of interface control instruments throughout the process it is recommended that this alcohol emulsion be broken, preferably by mechanical means (e.g., coalescence of the alcohol droplets). Laboratory tests showed that centrifugation was not effective. Heating of the emulsion also did not improve the phase separation of the alcohol. Chemical treatment with flocculating chemicals (e.g., aluminum and ferric chlorides) was also not effective.

### EXAMPLE 6

Two flat sheet membrane samples which have been soaked over a period of approximately 3 months in a representative mixture of alcohols were examined visually and then tested for salt rejection and flux using a standard brine solution at 1.5 × 10⁶ N/m² (225 psig). The two samples (i.e, Toray's SU-810 reverse osmosis membrane and Desalination Inc.'s nylon-based reverse osmosis membrane) both appeared physically intact (i.e., no change in color, no de-lamination, no change in appearance of the alcohol mixture itself and no loss in surface characteristics of the membranes). The Toray membrane curled up more severely than the nylon-based membrane. However, upon rinsing it thoroughly in water, the membrane sample flattened out again. Even more importantly, after only a 24 hour test with 0.2% NaCl solution at 1.5 × 10⁶ N/m² (225 psig), the Toray membrane's salt rejection recovered to 95.5%, only slightly lower than the 97% rejection after 10 days of soaking in free alcohols. The water flux from the soaked Toray membrane recovered to 12 l/m²/hr (7.1 gfd) compared to 14.2 l/m²/hr (8.4 gfd) obtained after the short soak test. It is likely that further improvements in the salt rejection and water flux might be obtained after further rinsing in water. In contrast, the Desal. nylon-based membrane recovered a flux of only 5.9 l/m²/hr (3.5 gfd) and a salt rejection of only 83.5% after 24 hours, compared to 29.9 l/m²/hr (17.7 gfd) and 97.4% rejection before exposure to the alcohol. These results offer further evidence of the Toray membrane's chemical compatibility, even upon prolonged exposure to the pure alcohols. However, it is not recommended to operate the reverse osmosis membrane system in the presence of a large concentration of free alcohol since the permeate quality will suffer as a result of membrane fouling.

### EXAMPLE 7

A GFT #1304 dehydration membrane (i.e., a polyvinyl alcohol crosslinked with maleic acid as the dense layer on top of polyacrylonitrile (PAN) porous sub-layer on a non-woven fabric) under pervaporating conditions was contacted with an ethanolic/water mixture to determine the amount of ethanol which permeates through the membrane together with water. The testing was run at 70°C with various cuts of feed, product, and permeate being collected. The results are set forth below in Table 6.

**Table 6**

| Sample | Wt% Feed | Ethanol Permeate | Flux kg/m²-hr | Run Time (hours) |
|---|---|---|---|---|
| 1 | 19.9 | 6.3 | 1.9 | 2 |
| 2 | 20.6 | 7.0 | 2.0 | 5 |
| 3 | 16.5 | 8.2 | 2.7 | 7 |
| 4 | 17.0 | 7.3 | 2.9 | 8 |
| 5 | 16.6 | 7.0 | 2.8 | 10 |
| 6 | 18.8 | 4.0 | 1.9 | 29 |
| 7 | 19.6 | 6.7 | 2.7 | 36 |
| 8 | 20.8 | 6.6 | 2.8 | 40 |

The GFT #1304 dehydration membrane exhibited high flux and a reasonable separation of ethanol from water. The amount of ethanol in the water permeate could probably have been reduced with the use of a more selective membrane which is also contemplated hereby.

While we have shown and described several embodiments in accordance with our invention, it is to be clearly understood that the same are susceptible to numerous changes apparent to one skilled in the art. Therefore, we do not wish to be limited to the details shown and described but intend to show all changes and modifications which come within the scope of the appended claims.

## Claims

1. A method for treating an emulsified organic/aqueous effluent stream that comprises water and alcohol, said treatment comprises the steps of:
separating said emulsified organic/aqueous effluent stream into an aqueous phase stream which comprises water and residual alcohol and an organic phase stream which comprises alcohol and residual water, using a phase separator or coalescer;
separating said aqueous phase stream into an organic enriched stream and aqueous stream by contacting a membrane separator with said aqueous phase stream;
recycling said organic enriched stream to said emulsified organic/aqueous effluent stream; and
discharging said aqueous stream.

2. The method according to claim 1 further comprising the steps of:
separating said organic phase stream into an organic-rich stream and an organic-poor stream; and
recycling said organic-poor stream to either said aqueous phase stream or said organic phase stream.

3. The method according to either of claims 1 or 2 wherein the emulsified organic/aqueous effluent stream comprises water, alcohol and at least one metal complex.

4. The method according to claim 3 wherein the effluent stream has been produced from a metal dialkyldithiophosphate synthesis process.

5. The method according to any of claims 1 to 4 wherein said membrane separator includes a reverse osmosis membrane.

6. The method according to claim 5 wherein said aqueous stream permeates through said reverse osmosis membrane and said metal and organic enriched stream is the retentate.

7. The method according to claim 5 wherein the separating of said aqueous phase stream into a metal-enriched stream and an aqueous stream occurs at a pressure of between about 2.068 x 10⁵ N/m² to about 1.379 x 10⁷ N/m².

8. The method according to claim 5 wherein said reverse osmosis membrane is a solvent resistant membrane.

9. The method according to claim 8 wherein said solvent resistant membrane is a polyamide-based membrane.

10. The method according to claim 9 wherein said polyamide-based membrane is an interfacially synthesized reverse osmosis membrane comprising a microporous substrate and an ultra-thin membrane covering the substrate, wherein the ultra-thin membrane comprises a crosslinked aromatic polyamide.

11. The method according to claim 2 wherein the separating of said organic phase stream into an organic-rich stream and an organic-poor stream occurs by contacting a membrane separator with said organic phase stream.

12. The method according to claim 11 wherein said membrane separator includes a pervaporation membrane.

13. The method according to claim 12 wherein said organic-rich stream is the retentate and said organic-poor stream is the permeate.

14. The method according to claim 12 wherein pervaporation membrane is selected from the group consisting of: polyvinyl alcohol (crosslinked or non-crosslinked) membranes, polyacrylate salt on polyethersulfone membranes, crosslinked composite of a polysaccharide membranes, grafted polyethylene membranes, polypropylene membranes, poly(n-vinylpyrrolidone)-co-acrylonitrile membranes, ion-exchange resin/pendant acid group membranes, and a membrane having a blend of polyvinyl alcohol, polyacrylic acid and nylon.

15. The method according to claims 4 to 14 further comprising the step of:
recycling said organic-rich stream as a reactant in the synthesis of said metal dialkyldithiophosphate product.

## Patentansprüche

1. Verfahren zum Behandeln eines emulgierten organisch/wäßrigen Ausflußstroms, der Wasser und Alkohol umfaßt, bei dem in Stufen
der emulgierte organisch/wäßrige Ausflußstrom unter Verwendung eines Phasentrenners oder Koaleszers in einen wäßrigen Phasenstrom, der Wasser und Restalkohol umfaßt, und einen organischen Phasenstrom, der Alkohol und Restwasser umfaßt, getrennt wird;
der wäßrige Phasenstrom durch Kontaktieren eines Membranabscheiders mit dem wäßrigen Phasenstrom in einen mit organischen Bestandteilen angereicherten Strom und einen wäßrigen Strom getrennt wird;
der mit organischen Bestandteilen angereicherte Strom in den emulgierten organisch/wäßrigen Ausflußstrom zurückgeführt wird; und
der wäßrige Strom verworfen wird.

2. Verfahren nach Anspruch 1, bei dem außerdem in Stufen
der organische Phasenstrom in einen an organischen Bestandteilen reichen Strom und einen an organischen Bestandteilen armen Strom getrennt wird, und
der an organischen Bestandteilen arme Strom entweder in den wäßrigen Phasenstrom oder den organischen Phasenstrom zurückgeführt wird.

3. Verfahren nach einem der Ansprüche 1 oder 2, bei dem der emulgierte organisch/wäßrige Ausflußstrom Wasser, Alkohol und mindestens einen Metallkomplex umfaßt.

4. Verfahren nach Anspruch 3, bei dem der Ausflußstrom in einem Metalldialkyldithiophosphat-Syntheseverfahren erzeugt worden ist.

5. Verfahren nach einem der Ansprüche 1 bis 4, bei dem der Membranabscheider eine Umkehrosmosemembran einschließt.

6. Verfahren nach Anspruch 5, bei dem der wäßrige Strom durch die Umkehrosmosemembran permeiert und der an Metall und organischen Bestandteilen angereicherte Strom das Retentat ist.

7. Verfahren nach Anspruch 5, bei dem das Trennen des wäßrigen Phasenstroms in einen an Metall angereicherten Strom und einen wäßrigen Strom bei einem Druck zwischen etwa 2,068•10⁵ N/m² und etwa 1,379•10⁷ N/m² stattfindet.

8. Verfahren nach Anspruch 5, bei dem die Umkehrosmosemembran eine lösungsmittelbeständige Membran ist.

9. Verfahren nach Anspruch 8, bei dem die lösungsmittelbeständige Membran eine Membran auf Polyamidbasis ist.

10. Verfahren nach Anspruch 9, bei dem die Membran auf Polyamidbasis eine an der Grenzfläche synthetisierte Umkehrosmosemembran ist, die ein mikroporöses Substrat und eine das Substrat bedeckende ultradünne Membran umfaßt, wobei die ultradünne Membran ein vernetztes aromatisches Polyamid umfaßt.

11. Verfahren nach Anspruch 2, bei dem das Trennen des organischen Phasenstroms in einen an organischen Bestandteilen reichen Strom und einen an organischen Bestandteilen armen Strom durch Kontaktieren eines Membranabscheiders mit dem organischen Phasenstrom erfolgt.

12. Verfahren nach Anspruch 11, bei dem der Membranabscheider eine Pervaporationsmembran einschließt.

13. Verfahren nach Anspruch 12, bei dem der an organischen Bestandteilen reiche Strom das Retentat und der an organischen Bestandteilen arme Strom das Permeat ist.

14. Verfahren nach Anspruch 12, bei dem die Pervaporationsmem-bran ausgewählt ist aus der Gruppe bestehend aus (vernetzten oder unvernetzten) Polyvinylalkoholmembranen, Polyacrylatsalz-auf-Polyethersulfonmembranen, vernetzten Verbundmaterialien aus Polysaccharidmembranen, gepfropften Polyethylenmembranen, Polypropylenniembranen, Poly(n-vinylpyrrolidon)-co-acrylnitril-Membranen, Ionenaustauscherharz/seitenständige Säuregruppen-Membranen und einer Membran mit einem Gemisch aus Polyvinylalkohol, Polyacrylsäure und Nylon.

15. Verfahren nach einem der Ansprüche 4 bis 14, bei dem außerdem in einer Stufe der an organischen Bestandteilen reiche Strom als Reaktant in die Synthese des Metalldialkyldithiophosphatprodukts zurückgeführt wird.

## Revendications

1. Procédé de traitement d'un effluent organique/aqueux émulsionné, qui comprend de l'eau et un alcool, ce traitement comprenant les étapes qui consistent :
à diviser cet effluent organique/aqueux émulsionné en un courant de phase aqueuse qui comprend de l'eau et de l'alcool résiduel et en un courant de phase organique qui comprend l'alcool et de l'eau résiduelle, en utilisant un séparateur de phases ou coalesceur ;
à diviser le courant de phase aqueuse en un courant organique enrichi et en un courant aqueux par contact d'un séparateur à membrane avec ce courant de phase aqueuse ;
à recycler le courant organique enrichi dans le courant d'effluent organique/aqueux émulsionné ; et
à décharger ce courant aqueux.

2. Procédé suivant la revendication 1, qui comprend en outre les étapes consistant :
à fractionner le courant de phase organique en un courant riche en matière organique et en un courant pauvre en matière organique ; et
à recycler le courant pauvre en matière organique au courant de phase aqueuse ou au courant de phase organique.

3. Procédé suivant la revendication 1 ou 2, dans lequel le courant d'effluent organique/aqueux émulsionné comprend de l'eau, un alcool et au moins un complexe de métal.

4. Procédé suivant la revendication 3, dans lequel le courant d'effluent est produit dans un procédé de synthèse de dialkyldithiophosphates de métaux.

5. Procédé suivant l'une quelconque des revendications 1 à 4, dans lequel le séparateur à membrane comprend une membrane d'osmose inverse.

6. Procédé suivant la revendication 5, dans lequel le courant aqueux traverse par perméation la membrane d'osmose inverse et le courant enrichi en métal et en matière organique constitue le rétentat.

7. Procédé suivant la revendication 5, dans lequel la séparation du courant de phase aqueuse en un courant enrichi en métal et en un courant aqueux s'effectue à une pression comprise entre environ 2,068 x 10⁵ N/m² et environ 1,379 x 10⁷ N/m².

8. Procédé suivant la revendication 5, dans lequel la membrane d'osmose inverse est une membrane résistant aux solvants.

9. Procédé suivant la revendication 8, dans lequel la membrane résistant au solvant est une membrane à base de polyamide.

10. Procédé suivant la revendication 9, dans lequel la membrane à base de polyamide est une membrane d'osmose inverse de synthèse interfaciale comprenant un substrat microporeux et une membrane ultramince recouvrant le substrat, la membrane ultramince comprenant un polyamide aromatique réticulé.

11. Procédé suivant la revendication 2, dans lequel le fractionnement du courant de phase organique en un courant riche en matière organique et en un courant pauvre en matière organique a lieu par contact d'un séparateur à membrane avec le courant de phase organique.

12. Procédé suivant la revendication 11, dans lequel le séparateur à membrane contient une membrane de pervaporation.

13. Procédé suivant la revendication 12, dans lequel le courant riche en matière organique est le rétentat et le courant pauvre en matière organique est le perméat.

14. Procédé suivant la revendication 12, dans lequel la membrane de pervaporation est choisie dans le groupe consistant en : des membranes en polymère d'alcool vinylique (réticulé ou non réticulé), des membranes en sel polyacrylique sur polyéthersulfone, des membranes en composite réticulé d'un polysaccharide, des membranes en polyéthylène greffé, des membranes en polypropylène, des membranes en poly(n-vinylpyrrolidone)-co-acrylonitrile, des membranes en résine d'échange ionique à groupes acides latéraux et une membrane comprenant un mélange de polymère d'alcool vinylique, d'acide polyacrylique et de Nylon.

15. Procédé suivant les revendications 4 à 14, qui comprend en outre l'étape consistant :
à recycler le courant riche en matière organique comme matière réactionnelle dans la synthèse du produit formé de dialkyldithiophosphates métalliques.
